# EUROPEAN PATENT SPECIFICATION

(11) **EP 3 766 712 B1**
(45) Date of publication and mention of the grant of the patent: **01.06.2022**
(21) Application number: 20185100.3
(22) Date of filing: 09.07.2020
(51) Int. Cl.: B60H 1/00

(54) **VEHICLE AIR CONDITIONING APPARATUS**
FAHRZEUGKLIMAANLAGENVORRICHTUNG
CLIMATISEUR POUR VÉHICULE

(30) Priority: 17.07.2019 JP 2019131667
(43) Date of publication of application: 20.01.2021
(73) Proprietor: Valeo Japan Co., Ltd., Kumagaya-shi, Saitama 360-0193 (JP)
(72) Inventor: NAGANO, Hideki, SAITAMA, 360-0193 (JP); HASHIMOTO, Koichi, SAITAMA, 360-0193 (JP)
(74) Representative: Valeo Systèmes Thermiques

(56) References cited:
- JP-U- S58 136 813
- US-A1- 2003 037 918
- US-A1- 2003 205 370

## Description

### BACKGROUND OF THE INVENTION

### 1. Field of the Invention

The present invention relates to a vehicle air conditioning apparatus having formed therein one heating path between two cold air paths.

### 2. Description of the Related Art

As a vehicle air conditioning apparatus, one is known which has inside a housing a cold air path through which cold air passes and a heating path through which warm air passes. The vehicle air conditioning apparatus mixes the warm air in the heating path with the cold air passing through the cold air path, and after adjusting the temperature, blows the air into a vehicle interior. Each of some vehicle air conditioning apparatus has a plurality of blowoff portions and has a plurality of cold air paths so that airs of different temperatures can be sent to their respective blowoff portions. As a heretofore known technology regarding this kind of vehicle air conditioning apparatus, there is a technology disclosed in Patent Literature 1.

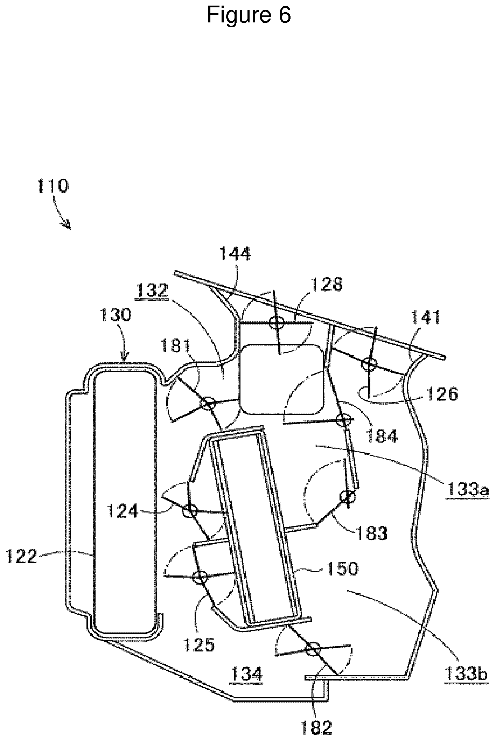

Fig. 6 will be referred to. Fig. 6 shows a vehicle air conditioning apparatus disclosed in Patent Literature 1. The signs are appropriately renumbered. A vehicle air conditioning apparatus 110 has, inside a housing 130, a cooling heat exchanger 122 which can cool air, a heating heat exchanger 150 which, being disposed downstream of the cooling heat exchanger 122, can heat the air, a first cold air path 132 through which the air having passed through the cooling heat exchanger 122 is caused to flow bypassing the heating heat exchanger 150, a heating path 133 in which the heating heat exchanger 150 is disposed, a second cold air path 134 which is adjacent to the heating path 133 and through which the air having passed through the cooling heat exchanger 122 is caused to flow bypassing the heating heat exchanger 150, a door 181 for adjusting the flow rate of air passing through the first cold air path 132, doors 124, 125 for adjusting the flow rate of air passing through the heating path 133, a door 182 for adjusting the flow rate of air passing through the second cold air path 134, two doors 183, 184 which can connect two paths, and opening/closing members 126, 128 which can open/close respective blowoff portions 141, 144 formed in the housing 130.

The blowoff portions 141, 144 are respectively a vent discharge portion 141 which carries out blowing toward a vehicle interior and a defroster discharge portion 144 which carries out blowing to front glass.

According to the vehicle air conditioning apparatus 110, the one heating path 133 is formed between the two cold air paths 132, 134. The number of parts and the size of the vehicle air conditioning apparatus 110 can be reduced as compared with when forming the heating path 133 for each of the cold air paths 132, 134. It is possible to provide the vehicle air conditioning apparatus 110 which, while it can adjust a blowoff temperature in accordance with each of the blowoff portions 141, 144, achieves a small size and a small number of parts.

Patent Literature 1: JP-A-2009-137524

Other vehicle air conditioning apparatuses comprising means for preventing air having passed through a cold air path from reaching an outflow surface of the heating heat exchanger are known from documents US 2003/205370 A1,US 2003/037918 A1 and JP S58 136813 U.

Fig. 7 will be referred to. Fig 7 is a diagram wherein Fig. 6 of Patent Literature 1 is re-described. Arrow A is added by the present inventors. In the position shown in the drawing, the vehicle air conditioning apparatus 110 is in a full cooling mode. That is, the full cooling mode is a mode in which it is designed to block blowing to the heating heat exchanger 150 and discharge the air cooled by the cooling heat exchanger 122 from the vent discharge portion 141 without warming the cooled air. The air having passed through the first and second cold air paths 132 and 134 is blown off into the vehicle interior from the vent discharge portion 141.

Research conducted by the present inventors reveals that in the full cooling mode, air can be blown off at a higher temperature than a set temperature. There is considered to be the following reason therefor. The first and second cold air paths 132 and 134 are different in shape from one another, and the distance from the first cold air path 132 to the vent discharge portion 141 and the distance from the second cold air path 134 to the vent discharge portion 141 are also different from one another. It is considered, therefore, that the air passing through the first cold air path 132 and the air passing through the second cold air path 134 are different in flow rate and in pressure from one another. These may cause it to happen that as shown by arrow A, for example, one portion of the air having passed through the second cold air path 134 is drawn to the first cold air path 132 side by negative pressure. Alternatively, it may happen that one portion of the air having passed through the first cold air path 132 is pushed out to the second cold air path 134 side by positive pressure, as opposed to arrow A. At this time, the air is warmed by passing through the heating heat exchanger 150. It is considered, therefore, that the warmed air joins together with the cold air and thereby the temperature of the air blown off from the vent discharge portion 141 reaches a higher temperature than the set temperature.

### SUMMARY OF THE INVENTION

An object of the present invention is to provide a vehicle air conditioning apparatus which can more reliably carry out temperature adjustment.

In the following description, reference signs in the accompanying drawings are appended in parentheses to facilitate the understanding of the present invention, but this does not limit the present invention to the illustrative embodiments.

According to the present invention, there is provided a vehicle air conditioning apparatus which includes
a housing (30) into which air can be blown;
a cooling heat exchanger (22) which, being housed in the housing (30), can cool the blown-in air; and
a heating heat exchanger (50) which, being housed in the housing (30) and provided downstream of the cooling heat exchanger (22) with reference to the flow of the blown-in air, can heat the blown-in air; and that
inside the housing (30) and downstream of the cooling heat exchanger (22) are formed a first cold air path (32) through which the cooled air can flow bypassing the heating heat exchanger (50); a heating path (33) which, being adjacent to the first cold air path (32) and provided with the heating heat exchanger (50), can heat the cooled air; and a second cold air path (34) which is adjacent to the heating path (33) and through which the cooled air can flow bypassing the heating heat exchanger (50), and the apparatus is characterized in that
the housing (30) is provided with
a first discharge portion (41) which can discharge the air having passed through the first cold air path (32) and the air having passed through the heating path (33) to outside the housing (30);
a second discharge portion (42) which can discharge the air having passed through the heating path (33) and the air having passed through the second cold air path (34) to outside the housing (30);
a partition wall (63) which, being provided on the downstream side of the heating heat exchanger (50), divides the first and second discharge portions (41) and (42) from each other; and
a cold air reach prevention portion (70; 70A) which can prevent the air having passed through the second cold air path (34) from reaching an outflow surface of the heating heat exchanger (50) .

According to the invention, the cold air reach prevention portion (70) has a second opening/closing member (27) which can open/close the second discharge portion (42) and a cold air reach prevention wall portion (62) which extends from the downstream end portion of the heating path (33) to the second opening/closing member (27) with reference to a position in which the second discharge portion (42) is closed.

In an embodiment not according to the invention, the cold air reach prevention portion (70A) has a second opening/closing member (27) which can open/close the second discharge portion (42), a wall portion (65A) which closes one portion of the downstream end portion of the heating path (33), and an extension portion (72A) which extends from the second opening/closing member (27) to the wall portion (65A) with reference to a position in which the second discharge portion (42) is closed.

Preferably, the vehicle air conditioning apparatus further includes a duct portion (13) which extends rearward from the second discharge portion (42) and through which the air discharged from the second discharge portion (42) is blown off.

Preferably, the first discharge portion (41) is a vent blowoff portion which carries out blowing toward the upper body of an occupant, while the second discharge portion (42) is a rear seat air-conditioning discharge portion which carries out blowing toward an occupant in a rear seat, and
the housing (30) is further provided with defroster discharge portions (44, 45) which carry out blowing toward front glass and a front seat foot discharge portion (46) which carries out blowing toward the legs of an occupant in a front seat

In the present invention, the air having passed through the second cold air path is prevented by the cold air reach prevention portion from reaching the outflow surface of the heating heat exchanger. Thereby, the cooled air having passed through the second cold air path, which is to be used for temperature conditioning as not heated by the heating heat exchanger, is prevented from being accidentally heated by the heating heat exchanger. Then, the accidentally heated air is also prevented from flowing into the first cold air path by way of the heating path. Thereby, when discharging conditioning air from the first discharge portion, the temperature of the conditiioning air can be adjusted to an appropriate temperature. It is possible to provide a vehicle air conditioning apparatus which can more reliably carry out the temperature adjustment.

### BRIEF DESCRIPTION OF THE DRAWINGS

Fig. 1 is a perspective view of a vehicle air conditioning apparatus according to a first working example, according to the invention.
Fig. 2 is a sectional view along the line 2-2 of Fig. 1.
Fig. 3 is a perspective view of a partition wall member shown in Fig. 2.
Fig. 4 is a diagram describing an operation of the vehicle air conditioning apparatus shown in Fig. 2.
Fig. 5 is a diagram schematically showing a vehicle air conditioning apparatus according to a second comparative example.
Fig. 6 is a diagram describing a heretofore known vehicle air conditioning apparatus.

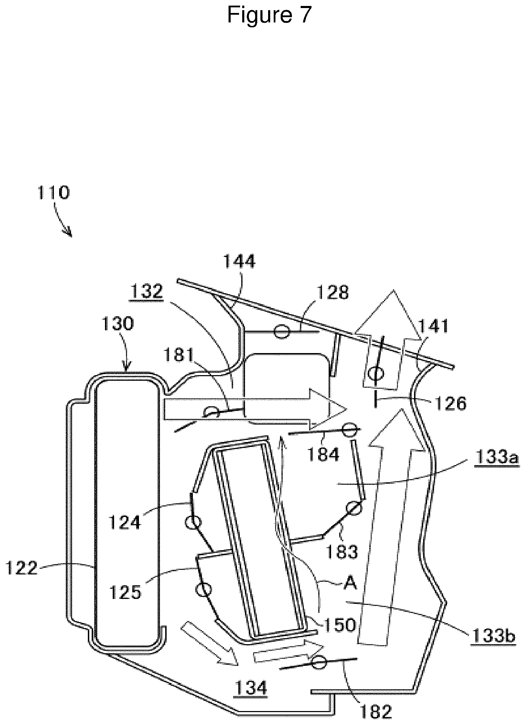

Fig. 7 is a diagram describing problems of the heretofore known vehicle air conditioning apparatus.

### DESCRIPTION OF THE PREFERRED EMBODIMENTS

A description will hereinafter be given, based on the accompanying drawings, of embodiments of the present invention. In the drawings, Fr represents front, Rr rear, Le the left with reference to an occupant in a vehicle interior, Ri the right with reference to the occupant in the vehicle interior, Up upper, and Dn lower.

### First Working Example

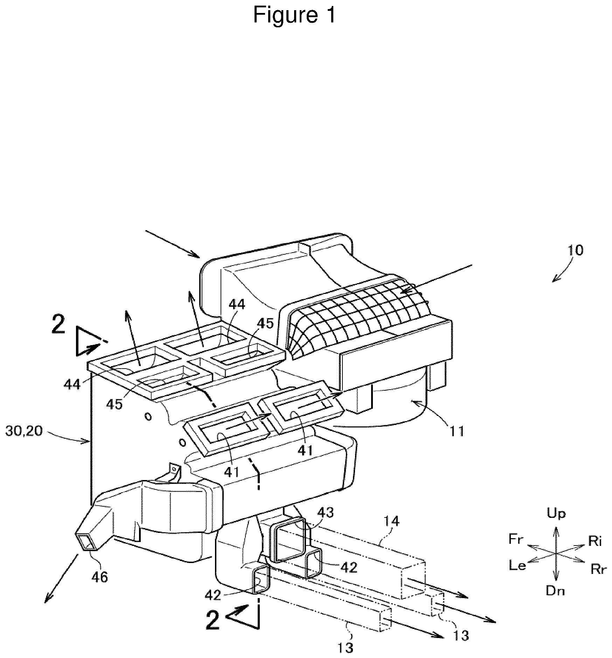

Fig. 1 will be referred to. A vehicle air conditioning apparatus 10 (hereinafter abbreviated as the "air conditioning apparatus 10") which adjusts the temperature of a vehicle interior is mounted on, for example, a passenger vehicle. The air conditioning apparatus 10 is disposed in the front of the vehicle interior so as to extend approximately in a left-right direction.

The air conditioning apparatus 10 has a blower section 11 which blows air sucked in, a temperature adjustment section 20 which carries out an adjustment of the temperature of the air blown from the blower section 11 and discharges the temperature-adjusted air into the vehicle interior, and duct portions 13, 14 which, extending rearward from the temperature adjustment section 20, lead the air to a rear seat.

An impeller and a motor, which are not shown, are housed in the blower section 11. The impeller rotates by driving a motor, and the air in and/or out of the vehicle interior is sucked into the blower section 11. The air sucked in the blower section 11 is supplied to the front of the temperature adjustment section 20.

The duct portions 13, 14, respectively, have a left and a right duct portion 13, 13 which blow the air to the legs of an occupant in the rear seat, and have a central duct portion 14 which, being positioned in the center between the duct portions 13, 13, blows the air to the upper body of the occupant in the rear seat. The left and right duct portions 13, 13 are provided in conformity respectively with the position of the legs of an occupant seating on the rear left side and with the position of the legs of an occupant seating on the rear right side.

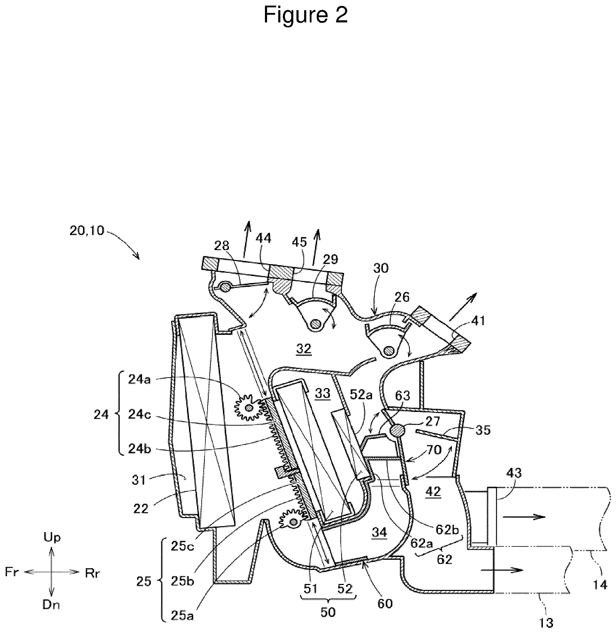

Fig. 2 will be referred to. The temperature adjustment section 20 has housed inside a housing 30 thereof connected to the blower section 11 (refer to Fig. 1) a cooling heat exchanger 22 which can cool the air blown in, a heating heat exchanger 50 which, being provided downstream of the cooling heat exchanger 22, can heat the air blown in, a first and a second mix door 24 and 25 which, being disposed between the cooling and heating heat exchangers 22 and 50, can adjust the temperature by adjusting the amount of air passing through the heating heat exchanger 50, a path defining member 60 which defines one portion of a path through which the air passes, and a first to a third opening/closing member 26 to 29 (both 28 and 29 are the third opening/closing members. The details will be described hereinafter.) which are swingably provided.

The housing 30 has combined thereinto a plurality of resin molded articles. The housing 30 is provided with a lead-in path 31 through which to lead the air sent from the blower section 11 (refer to Fig. 1) into the cooling heat exchanger 22, a first cold air path 32 through which the air cooled passing through the cooling heat exchanger 22 can flow bypassing the heating heat exchanger 50, a heating path 33 which is adjacent to the first cold air path 32 and in which the heating heat exchanger 50 is provided, and a second cold air path 34 which is adjacent to the heating path 33 and through which the cooled air can flow bypassing the heating heat exchanger 50.

In addition, the housing 30 has formed therein a fully open position stopper portion 35 which, extending toward the trajectory of the second opening/closing member 27, defines the fully open position of the second opening/closing member 27. The second opening/closing member 27, when fully open, abuts against the fully open position stopper portion 35.

Fig. 1 will also be referred to. The housing 30 has further formed therein a vent discharge portion 41 (a first discharge portion 41) which, being formed downstream of the first cold air path 32, can discharge the air toward the upper body of an occupant in a front seat, a rear seat air-conditioning discharge portion 42 (a second discharge portion 42) which, being formed downstream of the second cold air path 34, is for blowing the air toward the legs of the occupant in the rear seat, a second rear seat air-conditioning discharge portion 43 which, being formed downstream of the second cold air path 34, is for blowing the air toward the upper body of the occupant in the rear seat, a front defroster discharge portion 44 (a defroster discharge portion 44) and a rear defroster discharge portion 45 (a defroster discharge portion 45) which blow the air toward and defog front glass, and a front seat foot discharge portion 46 for blowing the air toward the legs of the occupant in the front seat.

The air discharged from the rear seat air-conditioning discharge portion 42 may be led to the upper body of the occupant in the rear seat. In this case, the air from the second rear seat air-conditioning discharge portion 43 may be led to the legs of the occupant in the rear seat. Also, only the rear seat air-conditioning discharge portion 42 may be used without using the second rear seat air-conditioning discharge portion 43. In this case, the air discharged from the rear seat air-conditioning discharge portion 42 may be led to the legs of the occupant in the rear seat and may also be led to the upper body of the occupant in the rear seat.

Furthermore, as the second discharge portion, the defroster discharge portions 44, 45 and the front seat foot discharge portion 46 can also be used, other than the rear seat air-conditioning discharge portion 42 and the second rear seat air-conditioning discharge portion 43.

Only one of the front or rear defroster discharge portion 44 or 45 may be formed. The front and rear defroster discharge portions 44 and 45 will appropriately be collectively described as the "defroster discharge portions 44, 45".

Fig. 2 will be referred to. The air blown from the blower section 11 (refer to Fig. 1), passing through the lead-in path 31, is led to the cooling heat exchanger 22. The air led to the cooling heat exchanger 22 is cooled when passing through the cooling heat exchanger 22. The cooled air passes through one of the first cold air path 32, the heating path 33, or the second cold air path 34. The air having passed through the heating path 33, out of them, is heated by the heating heat exchanger 50.

The air having passed through the heating path 33 is appropriately mixed with the air having passed through the first cold air path 32, based on a preset blowoff temperature, and is discharged into the vehicle interior from the vent discharge portion 41. In the same way, the air having passed through the heating path 33 is appropriately mixed with the air having passed through the second cold air path 34, based on a preset blowoff temperature, and is discharged from the rear seat air-conditioning discharge portion 42. The air discharged from the rear seat air-conditioning discharge portion 42 is discharged to the legs of the occupant in the rear seat via the duct portion 13.

The cooling heat exchanger 22 is, for example, such that a refrigerant is caused to flow thereinside. The total amount of air sent from the blower section 11 is cooled passing through the cooling heat exchanger 22.

The heating heat exchanger 50 is formed of a first and a second heater 51 and 52. Both the first and second heaters 51 and 52 can heat the air. For example, the first heater 51 is an electrothermal heater, and the second heater 52 a refrigerant heater.

The heating heat exchanger 50 can also be configured of one heater. Also, when configuring the heating heat exchanger 50 of two heaters, both the heaters can also be of a refrigerant type, and both the heaters can also be of an electrothermal type. Also, the first heater 51 can also be configured of a refrigerant one, and the second heater 52 can also be configured of an electrothermal one. That is, they can be arbitrarily chosen.

The first mix door 24 has a first pinion 24a which, being rotatably provided, is configured of a pinion gear, a first rack 24b configured of a rack engaging with the first pinion 24a, and a first shutter 24c which, being formed integral with the first rack 24b, can adjust the respective amounts of opening of the first cold air path 32 and the heating path 33.

The second mix door 25 has a second pinion 25a which, being rotatably provided, is configured of a pinion gear, a second rack 25b configured of a rack engaging with the second pinion 25a, and a second shutter 25c which, being formed integral with the second rack 25b, can adjust the respective amounts of opening of the second cold air path 34 and the heating path 33.

When the first shutter 24c fully opens the first cold air path 32 and the second shutter 25c fully opens the second cold air path 34, the heating path 33 becomes fully closed. That is, in the position shown in the drawing, the first and second cold air paths 32 and 34 are fully open, and the heating path 33 is fully closed. On the other hand, when the heating path 33 is fully opened, the first cold air path 32 is fully closed by the first shutter 24c, and the second cold air path 34 is fully closed by the second shutter.

For example, an occupant operates a control section provided in the vehicle interior, changing a set temperature. Thereby, the motor is energized via the control section and activated. The first pinion 24a and/or the second pinion 25a rotate by activating the motor. The first rack 24b and/or the second rack 25b engaging with the rotating first pinion 24a and/or the second pinion 25a move linearly in front of the first heater 51. Thereby, the respective amounts of opening of the first cold air path 32, the second cold air path 34, and the heating path 33 are adjusted. By adjusting the amounts of opening, the respective amounts of cold air and warm air are adjusted, and by mixing them together, it is possible to blow the air of a predetermined temperature into the vehicle interior.

The first and second mix doors 24 and 25 can also be configured by being swingably provided.

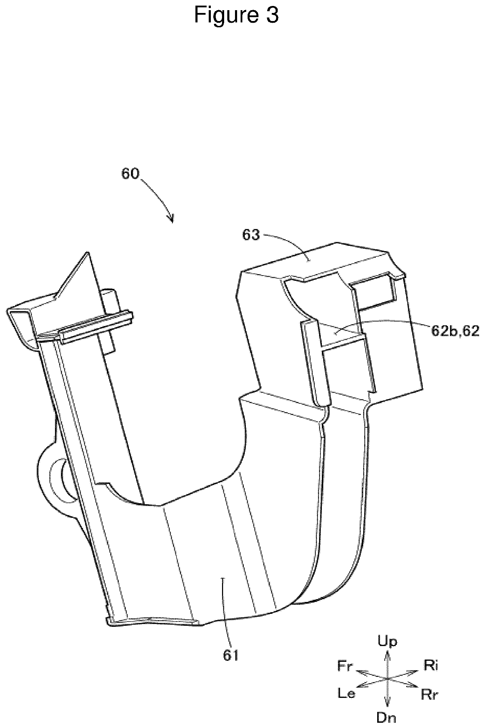

Fig. 3 will also be referred to. The path defining member 60 fixed inside the housing 30 is configured of a resin molded article. The path defining member 60 has a path portion 61 which configures at least one portion of the second cold air path 34, a cold air reach prevention wall portion 62 which, extending from the downstream end portion of the heating path 33 to the second opening/closing member 27, prevents the air having passed through the second cold air path 34 from reaching an outflow surface 52a of the second heater 52, and a partition wall 63 which, extending toward the axis of the second opening/closing member 27, divides the first and second discharge portions 41 and 42 from each other.

That is, the at least one portion of the second cold air path 34, the cold air reach prevention wall portion 62, and the partition wall 63 are integrally configured into the one path defining member 60.

The path portion 61, having an approximately U-shape with reference to a section perpendicular to an air flow direction, defines the upper surface and both lateral surfaces of the second cold air path 34. The bottom surface of the second cold air path 34 is configured by the housing 30.

The cold air reach prevention wall portion 62 has a raised up portion 62a which is continued from the path portion 61 and raised upward along the outflow surface 52a of the second heater 52 and an extension portion 62b which extends toward the rear seat air-conditioning discharge portion 42 from the end portion of the raised up portion 62a.

The leading end of the extension portion 62b abuts against the second opening/closing member 27 in closed position. This prevents the air having passed through the second cold air path 34 from reaching the outflow surface of the second heater 52. That is, it can be said that a cold air reach prevention portion 70 is formed by the second opening/closing member 27 and the cold air reach prevention wall portion 62.

The partition wall 63, against which the second opening/closing member 27 is abuttable, also serves as a stopper against the rotation in the direction of opening of the second opening/closing member 27.

The first to third opening/closing members 26 to 29 are each swingably provided on the housing 30. The motor operates via the control section so that the vehicle interior reaches a preset temperature, swinging the first to third opening/closing members 26 to 29. The respective degrees of opening of the discharge portions 41 to 46 are adjusted by the first to third opening/closing members 26 to 29 swinging, adjusting the amount of air blown from each of the discharge portions 41 to 46.

The first opening/closing member 26 can open/close the vent discharge portion 41, the second opening/closing member 27 can open/close the rear seat air-conditioning discharge portion 42, the third opening/closing member 28 provided in the front can open/close the front defroster discharge portion 44, and the third opening/closing member 29 provided in the rear can open/close the rear defroster discharge portion 45.

A description will be given of an operation of the air conditioning apparatus 10.

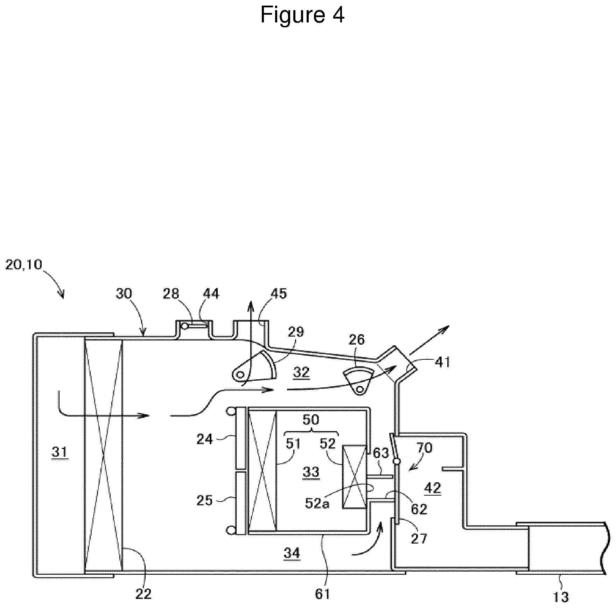

Fig. 4 will be referred to. The air conditioning apparatus 10 shown in Fig. 4 is placed in a full cooling mode. That is, the heating path 33 is occluded by the first and second mix doors 24 and 25. In the full cooling mode, the first opening/closing member 26 opens the vent discharge portion 41. The second opening/closing member 27 closes the rear seat air-conditioning discharge portion 42 and is in abutment with the cold air reach prevention wall portion 62.

In the position shown in the drawing, the air led in from the lead-in path 31 is cooled when passing through the cooling heat exchanger 22. The cooled air passes through the first cold air path 32 and is discharged into the vehicle interior through the vent discharge portion 41. Thereby, the vehicle interior is cooled.

At this time, the cold air reach prevention portion 70 prevents the air from flowing from the second cold air path 34 to the outflow surface 52a of the second heater 52.

The heretofore described air conditioning apparatus 10 exerts the following advantageous effects.

The air having passed through the second cold air path 34 is prevented by the cold air reach prevention portion 70 from reaching the outflow surface 52a of the heating heat exchanger 50. Thereby, the cooled air which, being to be used for temperature conditioning as not heated by the heating heat exchanger 50, has passed through the second cold air path 34 is prevented from being accidentally heated by the heating heat exchanger 50. Then, the accidentally heated air is also prevented from flowing into the first cold air path 32 by way of the heating path 33. Thereby, the temperature of conditioning air can be adjusted to an appropriate temperature when discharging the conditioning air from the vent discharge portion 41. It is possible to provide the air conditioning apparatus 10 which can more reliably carry out the temperature adjustment.

The flow of air from the second cold air path 34 to the heating path 33 side is blocked by the cold air reach prevention portion 70. The flow path resistance in the heating path 33 can be reduced as compared with, for example, when forming the downstream side of the heating path 33 in a labyrinth structure. This enables the heated air to flow smoothly and contributes to a reduction in the size of the whole air conditioning apparatus 10.

Furthermore, the cold air reach prevention portion 70 is configured by extending the cold air reach prevention wall portion 62 to the second opening/closing member 27 in closed position by utilizing the second opening/closing member 27 for opening/closing the rear seat air-conditioning discharge portion 42. It is possible to more reliably carry out the temperature adjustment with a small number of parts and a simplified configuration.

Furthermore, the second discharge portion is the rear seat air-conditioning discharge portion 42. The properly adjusted air can be supplied to the front and rear of the vehicle interior.

Fig. 1 will also be referred to. The air conditioning apparatus 10 is provided with, for example, the defroster discharge portions 44, 45, the vent discharge portion 41, the front seat foot discharge portion 46, and the rear seat air-conditioning discharge portion 42. When in the full cooling mode in which to blow off the cold air from the vent discharge portion 41 which is the first discharge portion, the cold air having passed through the second cold air path 34 is prevented from being heated by the heating heat exchanger 50 and mixed into the first cold air path 32 by way of the heating path 33, thus preventing the cold air blown off from the vent discharge portion 41 from rising in temperature.

Fig. 2 will be referred to. The cold air reach prevention wall portion 62 is integrally formed continued from the end portion of the second cold air path 34. For this reason, the air can be prevented from leaking to the heating path 33 from the boundary between the cold air reach prevention wall portion 62 and the second cold air path 34.

Furthermore, the at least one portion of the second cold air path 34, the cold air reach prevention wall portion 62, and the partition wall 63 are integrally configured into the one path defining member 60. These portions can be disposed in accurate positions by being disposed in their predetermined positions of the housing 30. Also, it is possible to more reliably suppress a leakage of the air passing through the second cold air path 34.

### Second Working Example

Next, a description will be given, based on the drawings, of an air conditioning apparatus 10A according to the second working example.

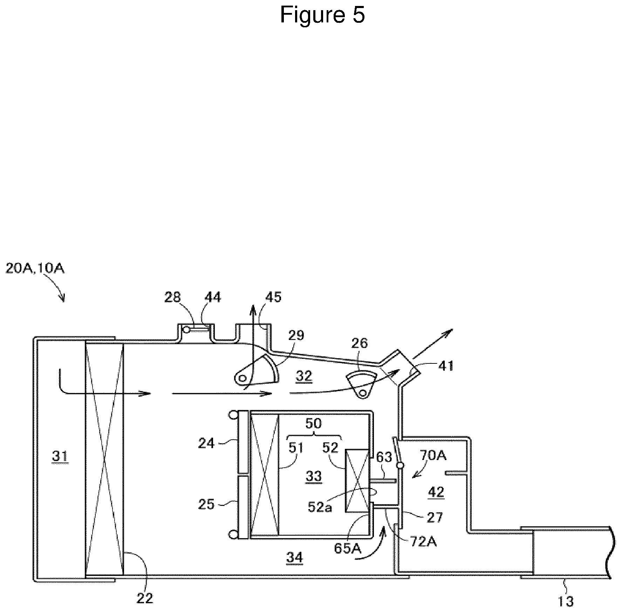

Fig. 5 schematically shows the air conditioning apparatus 10A according to the second working example. In the air conditioning apparatus 10A according to the second working example, in particular, the structure of a cold air reach prevention portion 70A in a blower section 20A differs from that of the air conditioning apparatus 10 (refer to Fig. 4) according to the first working example. The other basic configurations are common to those of the air conditioning apparatus 10 according to the first working example. Portions common to those of the first working example will use the same signs, omitting their detailed description.

The cold air reach prevention portion 70A has a second opening/closing member 27 which can open/close the rear seat air-conditioning discharge portion 42, a wall portion 65A which closes one portion of the downstream end portion of the heating path 33, and an extension portion 72A which extends from the second opening/closing member 27 to the wall portion 65A with reference to a position in which the rear seat air-conditioning discharge portion 42 is closed.

The wall portion 65A is integrally formed continued from the end portion of the second cold air path 34 by the path defining member 60 (refer to Fig. 3).

The extension portion 72A is formed integrally at the leading end of the second opening/closing portion 27.

The heretofore described air conditioning apparatus 10A also exerts the predetermined advantageous effects of the present invention.

In addition, the cold air reach prevention portion 70A is configured by extending the extension portion 62a from the second opening/closing member 27 in closed position to the wall portion 65A, by utilizing the second opening/closing member 27 for opening/closing the rear seat air-conditioning discharge portion 42 and the wall portion 65A raised upward in the downstream end portion of the heating path 33. The temperature adjustment can more reliably be carried out with a small number of parts and a simplified configuration.

The air conditioning apparatus according to the present invention is not limited to the working examples. The present invention is not limited to the working examples as far as they produce the workings of and exert the advantageous effects of the present invention.

The vehicle air conditioning apparatus of the present invention is suitable for being mounted on a passenger vehicle. Description of Reference Numerals and Signs

10, 10A: vehicle air conditioning apparatus
22: cooling heat exchanger
27: second opening/closing member
30: housing
32: first cold air path
33: heating path
34: second cold air path
41: vent discharge portion (first discharge portion)
42: rear seat air-conditioning discharge portion (second discharge portion)
44: front defroster discharge portion (defroster discharge portion)
45: rear defroster discharge portion (defroster discharge portion)
46: front seat foot discharge portion
50: heating heat exchanger
52a: outflow surface
62: cold air reach prevention wall portion
63: partition wall
65A: wall portion
70, 70A: cold air reach prevention portion
72A: extension portion

## Claims

1. A vehicle air conditioning apparatus, including:
a housing (30) into which air can be blown;
a cooling heat exchanger (22) which, being housed in the housing (30), can cool the blown-in air; and
a heating heat exchanger (50) which, being housed in the housing (30) and provided downstream of the cooling heat exchanger (22) with reference to the flow of the blown-in air, can heat the blown-in air; and that inside the housing (30) and downstream of the cooling heat exchanger (22) are formed a first cold air path (32) through which the cooled air can flow bypassing the heating heat exchanger (50); a heating path (33) which, being adjacent to the first cold air path (32) and provided with the heating heat exchanger (50), can heat the cooled air; and a second cold air path (34) which is adjacent to the heating path (33) and through which the cooled air can flow bypassing the heating heat exchanger (50), wherein the housing (30) is provided with:
a first discharge portion (41) which can discharge the air having passed through the first cold air path (32) and the air having passed through the heating path (33) to outside the housing (30)
a second discharge portion (42) which can discharge the air having passed through the heating path (33) and the air having passed through the second cold air path (34) to outside the housing (30);
a partition wall (63) which, being provided on the downstream side of the heating heat exchanger (50), divides the first and second discharge portions (41) and (42) from each other; and
a cold air reach prevention portion (70; 70A) which can prevent the air having passed through the second cold air path (34) from reaching an outflow surface (52a) of the heating heat exchanger (50),
**characterized in that**
the cold air reach prevention portion (70) has a second opening/closing member (27) which can open/close the second discharge portion (42) and a cold air reach prevention wall portion (62) which extends from the downstream end portion of the heating path (33) to the second opening/closing member (27) with reference to a position in which the second discharge portion (42) is closed.

2. The vehicle air conditioning apparatus according to claim 1, **characterized by** further including:
a duct portion (13) which extends rearward from the second discharge portion (42) and through which the air discharged from the second discharge portion (42) is blown off.

3. The vehicle air conditioning apparatus according to claim 1 or 2, **characterized in that** the first discharge portion (41) is a vent blowoff portion which carries out blowing toward the upper body of an occupant, and the second discharge portion (42) is a rear seat air-conditioning discharge portion which carries out blowing toward an occupant in a rear seat, and that the housing (30) is further provided with defroster discharge portions (44, 45) which carry out blowing toward front glass and a front seat foot discharge portion (46) which carries out blowing toward the legs of an occupant in a front seat.

## Patentansprüche

1. Fahrzeugklimaanlagenvorrichtung, umfassend:
ein Gehäuse (30), in das Luft eingeblasen werden kann;
einen Kühlungswärmetauscher (22), der, in dem Gehäuse (30) aufgenommen, die eingeblasene Luft kühlen kann; und
einen Heizungswärmetauscher (50), der, in dem Gehäuse (30) aufgenommen und stromabwärts des Kühlungswärmetauschers (22) in Bezug auf den Durchfluss der eingeblasenen Luft bereitgestellt, die eingeblasene Luft heizen kann; und
dass in dem Gehäuse (30) und stromabwärts des Kühlungswärmetauschers (22) ein erster Kaltluftpfad (32), durch den die gekühlte Luft den Heizungswärmetauscher (50) umgehend fließen kann; ein Heizungspfad (33), der, angrenzend an den ersten Kaltluftpfad (32) und mit dem Heizungswärmetauscher (50) bereitgestellt, die gekühlte Luft heizen kann; und ein zweiter Kaltluftpfad (34), der an den Heizungspfad (33) angrenzt und durch den die gekühlte Luft den Heizungswärmetauscher (50) umgehend fließen kann, ausgebildet sind, wobei
das Gehäuse (30) mit Folgendem bereitgestellt ist:
einen ersten Auslassabschnitt (41), der die Luft, die durch den ersten Kaltluftpfad (32) passiert ist, und die Luft, die durch den Heizungspfad (33) passiert ist, zu einer Außenseite des Gehäuses (30) auslassen kann einen zweiten Auslassabschnitt (42), der die Luft, die durch den Heizungspfad (33) passiert ist, und die Luft, die durch den zweiten Kaltluftpfad (34) passiert ist, zu einer Außenseite des Gehäuses (30) auslassen kann;
eine Trennwand (63), die, auf der stromabwärtigen Seite des Heizungswärmetauschers (50) bereitgestellt, die ersten und zweiten Auslassabschnitte (41) und (42) voneinander trennt; und
einen Kaltlufterreichungsverhinderungsabschnitt (70; 70A), der verhindern kann, dass die Luft, die durch den zweiten Kaltluftpfad (34) passiert ist, eine Ausströmfläche (52a) des Heizungswärmetauschers (50) erreicht,
**dadurch gekennzeichnet, dass**
der Kaltlufterreichungsverhinderungsabschnitt (70) ein zweites Öffnungs-/Schließelement (27), das den zweiten Auslassabschnitt (42) öffnen/schließen kann, und einen Kaltlufterreichungsverhinderungswandabschnitt (62), der sich von dem stromabwärtigen Endabschnitt des Heizungspfads (33) zu dem zweiten Öffnungs-/Schließelement (27) in Bezug auf eine Position, in der der zweite Auslassabschnitt (42) geschlossen ist, erstreckt, aufweist.

2. Fahrzeugklimaanlagenvorrichtung nach Anspruch 1, **dadurch gekennzeichnet, dass** sie ferner Folgendes umfasst:
einen Kanalabschnitt (13), der sich von dem zweiten Auslassabschnitt (42) nach hinten erstreckt und durch den die aus dem zweiten Auslassabschnitt (42) ausgelassene Luft ausgeblasen wird.

3. Fahrzeugklimaanlagenvorrichtung nach Anspruch 1 oder 2, **dadurch gekennzeichnet, dass** der erste Auslassabschnitt (41) ein Lüftungsausblasabschnitt ist, der ein Blasen hin zu dem Oberkörper eines Insassen ausführt, und der zweite Auslassabschnitt (42) ein Rücksitzklimaanlagenauslassabschnitt ist, der ein Blasen hin zu einem Insassen in einem Rücksitz ausführt, und dass das Gehäuse (30) ferner mit Entfrosterauslassabschnitten (44, 45), die ein Blasen hin zu einer Frontscheibe ausführen, und einem Vordersitzfußauslassabschnitt (46), der ein Blasen hin zu den Beinen eines Insassen in einem Vordersitz ausführt, bereitgestellt ist.

## Revendications

1. Appareil de climatisation de véhicule, incluant :
un boîtier (30) dans lequel de l'air peut être soufflé ;
un échangeur de chaleur de refroidissement (22) qui, étant logé dans le boîtier (30), peut refroidir l'air soufflé à l'intérieur ; et
un échangeur de chaleur de chauffage (50) qui, étant logé dans le boîtier (30) et prévu en aval de l'échangeur de chaleur de refroidissement (22) en référence à l'écoulement de l'air soufflé à l'intérieur, peut chauffer l'air soufflé à l'intérieur ; et, à l'intérieur du boîtier (30) et en aval de l'échangeur de chaleur de refroidissement (22) sont formés un premier chemin d'air froid (32), à travers lequel l'air refroidi peut s'écouler, contournant l'échangeur de chaleur de chauffage (50) ; un chemin de chauffage (33) qui, étant adjacent au premier chemin d'air froid (32) et pourvu de l'échangeur de chaleur de chauffage (50), peut chauffer l'air refroidi ; et un second chemin d'air froid (34), qui est adjacent au chemin de chauffage (33) et à travers lequel l'air refroidi peut s'écouler, contournant l'échangeur de chaleur de chauffage (50), dans lequel le boîtier (30) est pourvu de :
une première partie d'évacuation (41) qui peut évacuer l'air étant passé à travers le premier chemin d'air froid (32) et l'air étant passé à travers le chemin de chauffage (33) vers l'extérieur du boîtier (30) ;
une seconde partie d'évacuation (42) qui peut évacuer l'air étant passé à travers le chemin de chauffage (33) et l'air étant passé à travers le second chemin d'air froid (34) vers l'extérieur du boîtier (30) ;
une cloison de séparation (63) qui, étant prévue sur le côté aval de l'échangeur de chaleur de chauffage (50), divise les première et seconde parties d'évacuation (41) et (42) l'une de l'autre ; et
une partie de prévention d'atteinte d'air froid (70 ; 70A) qui peut empêcher l'air étant passé à travers le second chemin d'air froid (34) d'atteindre une surface d'écoulement sortant (52a) de l'échangeur de chaleur de chauffage (50),
**caractérisé en ce que**
la partie de prévention d'atteinte d'air froid (70) a un second élément d'ouverture/de fermeture (27) qui peut ouvrir/fermer la seconde partie d'évacuation (42) et une partie de paroi de prévention d'atteinte d'air froid (62) qui s'étend depuis la partie d'extrémité aval du chemin de chauffage (33) jusqu'au second élément d'ouverture/de fermeture (27) en référence à une position dans laquelle la seconde partie d'évacuation (42) est fermée.

2. Appareil de climatisation de véhicule selon la revendication 1, **caractérisé en ce qu'**il comprend en outre :
une partie de canal (13) qui s'étend vers l'arrière depuis la seconde partie d'évacuation (42) et à travers laquelle l'air évacué de la seconde partie d'évacuation (42) est expulsé.

3. Appareil de climatisation de véhicule selon la revendication 1 ou 2, **caractérisé en ce que** la première partie d'évacuation (41) est une partie d'expulsion à évent qui réalise un soufflage vers le corps supérieur d'un occupant, et la seconde partie d'évacuation (42) est une partie d'évacuation de climatisation pour siège arrière qui réalise un soufflage vers un occupant dans un siège arrière, et que le boîtier (30) est en outre pourvu de parties d'évacuation de dégivrage (44, 45) qui réalisent un soufflage vers une vitre avant et une partie d'évacuation pour espace jambes de siège avant (46) qui réalise un soufflage vers les jambes d'un occupant dans un siège avant.
